(19) **Europäisches Patentamt**

**European Patent Office**

**Office européen des brevets**

(11) Veröffentlichungsnummer: **0 347 528 B1**

(12) **EUROPÄISCHE PATENTSCHRIFT**

(45) Veröffentlichungstag der Patentschrift: **28.12.94**

(21) Anmeldenummer: **89105206.0**

(22) Anmeldetag: **23.03.89**

(51) Int. Cl.⁵: **C08J 9/34**, C08J 9/10, C08L 27/06

(54) **Verfahren zur Herstellung von geformten Gegenständen.**

(30) Priorität: **24.05.88 DE 3817509**

(43) Veröffentlichungstag der Anmeldung:
**27.12.89 Patentblatt 89/52**

(45) Bekanntmachung des Hinweises auf die Patenterteilung:
**28.12.94 Patentblatt 94/52**

(84) Benannte Vertragsstaaten:
**AT BE CH DE ES FR GB GR IT LI LU NL SE**

(56) Entgegenhaltungen:
**GB-A- 1 029 638**
**JP-A-63 087 312**
**US-A- 3 819 438**

(73) Patentinhaber: **DEUTSCHE SOLVAY-WERKE GMBH**
**Langhansstrasse 6**
**D-42697 Solingen (DE)**

(72) Erfinder: **Gottstein, Robert**
**Grote Gert 6**
**D-4134 Rheinberg (DE)**
Erfinder: **Saffert, Reinhard, Dr. Dipl.-Chem.**
**Lerchenweg 6**
**D-4134 Kamp-Lintfort (DE)**

(74) Vertreter: **Lauer, Dieter, Dr.**
**c/o Solvay Deutschland GmbH**
**Hans-Böckler-Allee 20**
**D-30173 Hannover (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von geformten Gegenständen, die über einer Schicht mit mindestens einer Schaumstruktur eine ungeschäumte, im "slush-molding"-Verfahren hergestellte Vinylchloridhomo-, -co-, -ter- oder -pfropfpolymerisatschicht (Kompaktschicht), vorzugsweise aus Weichpolyvinylchlorid, aufweisen und zur Herstellung der ungeschäumten Schicht zunächst ein weichmacherhaltiges Vinylchloridhomo-, -co-, -ter-, oder pfropfpolymerisat im "slush-molding"-Verfahren in eine Form eingebracht, durch Erhitzen geliert oder gesintert, vorzugsweise angeliert oder angesintert wird und die Kompaktschicht oder Oberschicht bildet, wonach gegebenenfalls im Überschuß aufgebrachte(s) oder eingebrachte(s), nicht gelierte(s) oder gesinterte(s), vorzugsweise nicht angelierte(s) oder angesinterte(s) Pulver, Plastisol oder Paste aus der Form ausgetragen oder abgeschüttet wird.

Es ist bereits bekannt Polyvinylchlorid bei der Verarbeitung zu sintern, sei es unter Verwendung von Polyvinylchloridplastisol oder von einem Polyvinylchloridpulver. Die Vorrichtungen arbeiten dabei beispielsweise nach dem Gießverfahren oder nach dem Rotationsgießverfahren. Es ist weiterhin bekannt so hergestellte Weichpolyvinylchloridteile oder geformte Folien (auch als PVC-Haut oder Skin bezeichnet) mit schäumbaren Kunststoffen, vorzugsweise mit Polyurethanen, zu hinterschäumen. Die geforderte Beständigkeit dieser Verbundkonstruktion, u.a. gegenüber Wärme, ist jedoch ungenügend. Die so hergestellte Polyvinylchloridschicht mit der Schaumschicht, vorzugsweise mit der Polyurethanhinterschäumung weisen Nachteile auf und bestehen u.a. die Langzeitwärmelagerung nicht, d.h. der Verbund Polyvinylchloridschaum, vorzugsweise Polyurethanschaum, ist unverträglich.

Gemäß US-PS 4,769,278 können Verbunde aus PVC und PVC-Schaum durch slush-moulding unter Verwendung von PVC-Pulvern hergestellt werden. Durch Einfügen filzartiger Stoffe werden die auftretenden Blasen unsichtbar gemacht. Die Möglichkeit einer Hinterschäumung wird nicht offenbart. Die Weiterverarbeitung der Teile erfolgt durch Pressen.

Gemäß US-PS 3,819,438 ist die Herstellung von gestrichenen PVC-Bodenbelägen nach dem CV-Verfahren bekannt. Hierbei kam es darauf an, die Festigkeit des Belages durch eine neuartige Zwischenschicht zu erhöhen.

Es werden nur PVC-Plastisole verwendet. Eine Möglichkeit zur Verbesserung des Verbundes von PVC und Polyurethan-Hinterschäumung wird ebenfalls nicht aufgezeigt.

Ziel und Aufgabe der vorliegenden Erfindung ist es eine Verbesserung der im "slush-molding"-Verfahren hergestellten Vinylchloridhomo-, -co-, -ter- oder -pfropfpolymerisatschicht (Kompaktschicht) im Verbund mit der darauf aufgebrachten Kunststoffschaumschicht, insbesondere Polyurethanschaumschicht, zu erzielen.

Erfindungsgemäß wurde festgestellt, daß diesen Zielen und Aufgaben ein Verfahren zur Herstellung von geformten Gegenständen, die über einer Schicht mit mindestens einer Schaumstruktur eine ungeschäumte, im "slush-molding"-Verfahren hergestellte Vinylchloridhomo-, -co-, -ter- oder pfropfpolymerisatschicht (Kompaktschicht) vorzugsweise aus Weichpolyvinylchlorid, aufweisen, gerecht wird, wobei zur Herstellung der ungeschäumten Schicht zunächst ein weichmacherhaltiges Vinylchloridhomo-, -co-, -ter-, oder -pfropfpolymerisat im "slush-molding"-Verfahren in eine Form eingebracht, durch Erhitzen geliert oder gesintert, vorzugsweise angeliert oder angesintert wird und die Kompaktschicht oder Oberschicht bildet, wonach gegebenenfalls im Überschuß aufgebrachte(s) oder eingebrachte(s), nicht gelierte(s) oder gesinterte(s), vorzugsweise nicht angelierte(s) oder angesinterte(s) Pulver, Plastisol oder Paste aus der Form ausgetragen oder abgeschüttet wird. Gemäß der Erfindung wird nach dem Sintern oder Gelieren, vorzugsweise Angelieren oder Ansintern ein weichmacherhaltiges Vinylchloridhomo-, -co-, -ter- oder -pfropfpolymerisat, das mindestens ein wasserfreies chemisches Treibmittel enthält, im "slush-molding"-Verfahren aufgebracht, wobei für die Sperrschicht eine Mischung aus 100 Gew.-Teilen Vinylchloridhomo-, -co-, -ter- oder -pfropfpolymerisat, 30 bis 80 Gew.-Teilen, vorzugsweise 40 bis 70 Gew.-Teilen mindestens eines Weichmachers (Monomerweichmacher und/oder Polymerweichmacher), 1 bis 15 Gew.-Teilen, vorzugsweise 2 bis 10 Gew.-Teilen, mindestens eines Stabilisators und/oder Kickers für das Treibmittel (einschließlich Antioxidantien) 1 bis 6 Gew.-Teilen, vorzugsweise 1,5 bis 3 Gew.-Teilen, mindestens eines wasserfreien chemischen Treibmittels oder Treibmittelgemisches, 0 bis 20 Gew.-Teilen, vorzugsweise 0 bis 10 Gew.-Teilen, mindestens eines Füllstoffes oder Füllstoffgemisches und/oder Zusatzstoffes verwendet und die Mischung im "slush-molding"-Verfahren bei Temperaturen über 180 °C, vorzugsweise über 200 °C, gesintert, geliert und ausgeschäumt wird. Danach erfolgt in einer anderen Form die Aufbringung einer weiteren Schaumschicht oder Hinterschäumung.

Nach dem erfindungsgemäßen Verfahren wird für die Kompaktschicht eine Mischung aus 100 Gew.-Teilen Vinylchloridhomo-, -co-, -ter- oder -pfropfpolymerisat, 30 bis 80 Gew.-Teile, vorzugsweise 40 bis 70 Gew.-Teile, mindestens eines Weichmachers (Monomerweichmacher und/oder Polymerweichmacher), 1 bis

2

15 Gew.-Teilen, vorzugsweise 2 bis 10 Gew.-Teilen, mindestens eines Stabilisators, einschließlich Antioxidantien oder Lichtstabilisatoren, 0 bis 2 Gew.-Teilen, vorzugsweise 0,5 bis 1,5 Gew.-Teilen, mindestens eines Entformungshilfsmittels, 0 bis 10 Gew.-Teilen, vorzugsweise 1 bis 5 Gew.-Teilen, mindestens eines Pigmentes und/oder Farbstoffes, 0 bis 10 Gew.-Teilen, vorzugsweise 0 bis 5 Gew.-Teilen, mindestens eines Füllstoffes und/oder Zusatzstoffes, verwendet und die Mischung wird im "slush-molding"-Verfahren bei Temperaturen über 180 °C, vorzugsweise über 200 °C, angesintert oder gesintert. Das Sintern oder Gelieren, vorzugsweise ansintern oder angelieren der Bestandteile der Kompaktschicht und der Sperrschicht erfolgt somit zweistufig, ohne das die Bestandteile der einzelnen Schichten vor Einbringung in die Form vermischt werden. Sowohl für die Kompakt- als auch für die Sperrschicht wird bevorzugt kein Zusatz von Asbestpulver, Asbestteilen oder Asbestfasern verwendet.

Nach der Sinterung oder Ansinterung der Kompaktschicht wird somit die Mischung für die Sperrschicht im "slush-molding"-Verfahren in die erhitzte, eine gleichmäßige oder annähernd gleichmäßige Kompaktschicht aufweisende Form, eingebracht und bei Temperaturen über 180 °C, vorzugsweise über 200 °C, durch Steuerung, (vorzugsweise bei der Formgebung, oder der Materialanordnung der Form) unter Bildung einer gleichmäßigen oder annähernd gleichmäßigen feinporigen dicken Sperrschicht gesintert und ausgeschäumt. Gemäß der vorliegenden Erfindung wird kein Treibmittel auf der Basis von Wasser eingesetzt, da bei der Verwendung von Wasser kraterförmige und/oder grobporige Sperrschichtstrukturen entstehen, die keine guten Sperreigenschaften besitzen.

Die mittlere Dicke der Kompaktschicht ist von dem jeweiligen Einsatzgebiet des geschäumten Teiles abhängig und beträgt nach einer bevorzugten Ausführungsform 0,4 bis 3 mm, vorzugsweise 0,7 bis 1,5 mm.

Die mittlere Dicke der gesinterten und geschäumten Sperrschicht ist unter anderem von der Dicke der Kompaktschicht, deren Zusammensetzung (Weichmachergehalt und dgl.) abhängig und beträgt nach einer bevorzugten Ausführungsform 0,5 bis 4 mm, vorzugsweise 1,5 bis 3 mm.

Für die Sperrschicht und/oder Kompaktschicht wird bevorzugt eine PVC-Sorte oder eine Mischung aus 100 Gew.-Teilen Vinylchloridhomo-, -co-, -ter- oder -pfropfpolymerisat verwendet, die einen K-Wert von 50 bis 80, vorzugsweise 62 bis 75, aufweist, in Form eines Pulvers und/oder einer Paste zusammen mit den Weichmachern oder den anderen Mischungsbestandteilen eingesetzt.

Die geschäumte Sperrschicht weist nach einer bevorzugten Ausführungsform eine Dichte von 0,2 bis 0,8 g/cm$^2$, vorzugsweise 0,4 bis 0,6 g/cm$^2$, auf.

Nach einer weiteren bevorzugten Ausführungsform wird bei der Ausschäumung der Sperrschicht diese einer höheren Temperatur und/oder längeren Wärmeeinwirkungszeit ausgesetzt.

Nach einer bevorzugten Ausführungsform des erfindungsgemäßen Verfahrens wird die Mischung für die Kompaktschicht in die vorgeheizte Form oder Formhälfte (das vorgeheizte Galvano) im Überschuß eingebracht oder eingeschüttet. Nach einer gewissen Verweilzeit wird die nicht angesinterte oder nicht gesinterte Kunststoffmischung von der gesinterten, angesinterten oder gelierten Schicht abgeschüttet und die Form, Formhälfte (das Galvano) zum Nachsintern in der Kompaktschicht erneut erhitzt, beispielsweise in einen Ofen geschoben oder eingebracht.

Nach Beendigung des Nachsinterns wird die Kunststoffmischung für die Sperrschicht im Überschuss auf die gesinterte noch heiße oder warme Kompaktschicht aufgebracht oder geschüttet und nach einer gewissen Zeit das überschüssige Material abgeschüttet oder entfernt. Zum Ausschäumen der Sperrschicht wird die Form, die Formhälfte, das Formteil und dgl. (das Galvano) nochmals für eine gewisse Zeit erhitzt, z.B. in einen Ofen gebracht. Nach Beendigung des Nachsinterprozesses wird die Erhitzung unterbrochen, z.B. wird die Form (das Galvano) aus dem Ofen entnommen, und nachfolgend abgekühlt, vorzugsweise unter Verwendung von Wasser oder anderen Kühlflüssigkeiten auf Temperaturen von ca. 15 bis 55 °, vorzugsweise 25 bis 45 °C abgekühlt. Danach wird der Formling aus der Form, der Formhälfte, dem Formteil (dem Galvano) entnommen.

Die nach dem erfindungsgemäßen Verfahren hergestellten Formkörper oder Formlinge bieten gegenüber dem nachfolgend aufgebrachten Kunststoffschaum, vorzugsweise Polyurethanschaum, eine barriere Schicht, die eine Reduzierung der Weichmacherwanderung ermöglicht. Beispielsweise ist eine Reduzierung der Weichmacherwanderung bei Versuchen bis zu 50 % festgestellt worden.

Die nach dem erfindungsgemäßen Verfahren hergestellten Formkörper, Formlinge oder Formteile überstehen eine Wärmelagerung von 500 Stunden bei 132 °C, ohne daß die Kompaktschicht nach dieser Lagerung so steif ist, daß sie bei Stoß- oder Knickbeanspruchung bricht. Die ausgezeichnete Haftung gegenüber dem Kunststoffschaum, vorzugsweise dem Polyurethanschaum, ist eine weitere vorteilhafte Eigenschaft.

Nach einer bevorzugten Ausführungsform des erfindungsgemäßen Verfahrens liegt dabei die Ausschäumtemperatur der Sperrschicht bei einer Temperatur, die um mehr als 5 K, vorzugsweise mehr als 10 K, höher ist, als die Temperatur die zur Bildung der Kompaktschicht verwendet wurde und/oder die Ausschäumzeit für die Sperrschicht liegt um mehr als 5 %, vorzugsweise mehr als 10 %, oberhalb der Gelier- oder Sinterzeit der Kompaktschicht.

Auf die Sperrschicht wird als weitere Schaumschicht oder Hinterschäumung ein PVC-armer Schaum (PVC-Gehalt unter 25 Gew.-%), vorzugsweise PVC-freier Schaum, insbesonderer Polyurethan oder polyurethanhaltiger Schaum, aufgebracht.

Gemäß einer bevorzugten Ausführungsform wird nach dem Aufbringen der Sperrschicht auf die Kompaktschicht der aus mindestens zwei Schichten bestehende geformte Gegenstand aus der Form herausgenommen und in einer getrennten Form hinterschäumt, vorzugsweise mit einem Polyurethanschaum hinterschäumt.

Die erfindungsgemäße Weich-PVC-Schaumschicht als Sperrschicht weist nicht die Nachteile auf, die allgemeine Sperrlacke (z.B. Sperrlacke auf Acrylatbasis) in Kombination mit Weich-Polyvinylchloridteilen oder Kalanderfolien haben. So werden bei der Behandlung mit dem Sperrlack nicht alle Stellen des geformten Teiles gleichmäßig erreicht oder behandelt. Ferner entstehen beim Trocknen der Lacke Lösungsmitteldämpfe, die die Weiterverarbeitung erschweren oder gegebenenfalls bei der nachträglich aufzubringenden Schaumschicht auch zu Störungen führen können.

Gemäß der Erfindung können als Sperrschicht unter anderem Polyvinylchlorid Dry-blends, welche ein chemisches Treibmittel enthalten und/oder Polyvinylchlorid-Liquid-Blends, welche ebenfalls ein chemisches Treibmittel enthalten, eingesetzt werden.

Nach einer bevorzugten Ausführungsform werden die Formkörper oder Formteile wie folgt hergestellt:

1. Schritt: Slush molding-Verfahren, Gießen bzw. Rotationsgießen der Polyvinylchlorid-Haut aus Weich-Polyvinylchlorid (unter Verwendung der Zusammensetzung der Kompaktschicht, als ungeschäumte Rezeptur in Form von Dry-blends und/oder Liquid-blends). Bevorzugt wird die so hergestellte Kompaktschicht oder das aus der Kompaktschicht entstehende Teil aus der Gießform nicht entnommen.

2. Schritt: Nochmaliges Gießen oder Rotationsgießen mit der Mischung der Sperrschicht (Weich-Polyvinylchlorid-Schaum-Rezeptur für die Sperrschicht in Form von Dry-blends oder Liquid-Blends). Das Teil wird aus der Form entnommen.

3. Schritt: Hinterschäumen mit Kunststoffschaum, vorzugsweise Polyurethanschaum, wobei bevorzugt eine neue Form verwendet wird.

Automobilteile sind infolge der möglichen hohen Aufheizung des Innenraums (weit über 150 °C wurden gemessen) hohen thermischen Belastungen ausgesetzt. Die bisher schärfsten Prüfbedingungen zur Simulation dieser Verhältnisse lauten: 500 h Lagerung bei 132 °C. Unter diesen Bedingungen bestehen nach bekannter Weise hergestellt Slush-Moulding-Teile die Tests nicht. Zum einen extrahiert das Polyurethan den Weichmacher aus der Polyvinylchlorid-Haut, was zu einer Verhärtung der Teile führt. Zum anderen wird die thermische Stabilität des PVC durch migrierte PUR-Bestandteile beeinträchtigt, was eine Verfärbung der PVC-Haut bewirkt.

Die erfindungsgemäß mit der Sperrschicht aus Weich-Polyvinylchlorid-Schaum hergestellten Teile weisen diese Nachteile nicht auf. Eine weitere nützliche Eigenschaft der erfindungsgemäßen Sperrschicht ist die ausgezeichnete Haftung gegenüber dem Kunststoffschaum, vorzugsweise Polyurethanschaum.

Die Erfindung betrifft weiterhin die Verwendung einer Mischung, die je 100 Gew.-Teile Vinylchloridhomo-, -co-, -ter- oder -pfropfpolymerisat 30 bis 80 Gew.-Teilen, vorzugsweise 40 bis 70 Gew.-Teilen, mindestens eines Weichmachers (Monomerweichmacher und/oder Polymerweichmacher), 1 bis 15 Gew.-Teilen, vorzugsweise 2 bis 10 Gew.-Teilen, mindestens eines Stabilisators und/oder Kickers für das Treibmittel (einschließlich Antioxidantien) 1 bis 6 Gew.-Teilen, vorzugsweise 1,5 bis 3 Gew.-Teilen, mindestens eines chemischen wasserfreien Treibmittels oder Treibmittelgemisches, 0 bis 20 Gew.-Teilen, vorzugsweise 0 bis 10 Gew.-Teilen, mindestens eines Füllstoffes oder Füllstoffgemisches und/oder Zusatzstoffes zur Herstellung einer Sperrschicht im "slush-molding"-Verfahren.

Die Erfindung betrifft weiterhin die Verwendung einer Mischung in Form eines Pulvers oder einer Paste zur Herstellung einer Sperrschicht im "slush-molding"-Verfahren, die je 100 Gew.-Teile Vinylchloridhomo-, -co-, -ter- oder -pfropfpolymerisat, mit einem K-Wert von 50 bis 80, vorzugsweise 62 bis 75, 30 bis 80 Gew.-Teilen, vorzugsweise 40 bis 70 Gew.-Teilen, mindestens eines Weichmachers (Monomerweichmacher und/oder Polymerweichmacher), 1 bis 15 Gew.-Teilen, vorzugsweise 2 bis 10 Gew.-Teilen, mindestens eines Stabilisators und/oder Kickers für das Treibmittel (einschließlich Antioxidantien), 1 bis 6 Gew.-Teilen, vorzugsweise 1,5 bis 3 Gew.-Teilen, mindestens eines chemischen wasserfreien Treibmittels oder Treibmittelgemisches, 0 bis 20 Gew.-Teilen, vorzugsweise 0 bis 10 Gew.-Teilen, mindestens eines Füllstoffes oder Füllstoffgemisches und/oder Zusatzstoffes enthält, zur Herstellung von temperaturbeständigen Innenraumteilen von Kraftfahrzeugen.

4

Vor dem Einbringen, der Zusammensetzung oder Mischung für die jeweilige Schicht, insbesondere der Kompaktschicht, wird, wie bereits vorher ausgeführt, die Form oder Formhälfte oder Gießform nach einer bevorzugten Ausführungsform vorgewärmt oder vorgeheizt.

Nach einer Ausführungsform wird die Zusammensetzung oder Mischung für die Kompaktschicht in mindestens eine Form, Formhälfte und/oder eine mit einer weiteren Form verschließbare Form gebracht und die Form oder Formhälfte bis zu 180 °C hin und zurückgeschwenkt oder um mehr als 180 °C geschwenkt oder rotiert.

Die Zusammensetzungen oder Mischungen für die Kompakt- und/oder Sperrschicht werden entweder im Überschuss jeweils getrennt eingebracht und nach dem Sintern oder Gelieren oder Ansintern oder Angelieren der jeweiligen Schicht, das restliche Material entfernt, oder es wird in genau berechneten Materialmengen bei bestimmten Temperaturen gearbeitet, ohne daß eine Entfernung des Materialüberschusses nach dem Sintern oder Ansintern erforderlich wird.

Nach einer Ausführungsform wird bei dem Einbringen der Polyvinylchloridmischung für die Kompaktschicht ein Unterdruck an die Form oder Formhälfte angelegt.

5

Beispiele:

1. <u>Ein Polyvinylchlorid-Dry-Blend zur Herstellung der</u> <u>Polyvinylchlorid-Haut (Kompaktschicht) enthält fol-</u> <u>gende Bestandteile:</u>

| | | |
|---|---|---|
| Suspensions-Polyvinylchlorid (K-Wert 58 bis 78, vorzugsweise 62 bis 75 | 100 | Gew.-Teile |
| Monomerweichmacher/Polymer-weichmacher | 40 bis 70 | " |
| mindestens einen Thermo-stabilisator, vorzugsweise auf der Basis einer Blei- oder BaZn- oder Sn-Verbindung | 2 bis 4 | " |
| Pigmente | 0 bis 10 | " |

2. <u>Ein Polyvinylchlorid-Liquid-Blend für die Kompakt-</u> <u>schicht enthält:</u>

| | | |
|---|---|---|
| Plastisol-Polyvinylchlorid in Form eines Emulsions- oder Mikrosuspensions-Polyvinylchlorid K-Wert 65 bis 80, vorzugsweise 62 bis 75 | 100 | " |
| Monomer-/Polymerweichmacher | 40 bis 70 | " |
| mindestens ein Thermostabili-sator, vorzugsweise auf der Basis einer Blei- oder BaZn- oder Sn-Verbindung | 2 bis 4 | " |

6

Pigmente                                  0 bis 10        "

3. **Ein schäumbares Polyvinylchlorid-
   Dry-Blend (für die Sperrschicht) enthält:**

   Suspensions-Polyvinylchlorid
   (K-Wert 58 bis 78, vorzugsweise
   62 bis 75)                              100             "

   Monomer-/Polymerweichmacher              40 bis 70       "

   mindestens ein Thermostabilisator,
   vorzugsweise auf der Basis einer
   Blei- oder BaZn- oder Sn-Verbindung                                  2 bis  4        "

   chemisches Treibmittel, vorzugsweise Azodicarbonamid)                   2 bis  5        "

4. **Ein schäumbares Polyvinylchlorid-Liquid-
   Blend (für die Sperrschicht) enthält:**

   Plastisol-Polyvinylchlorid
   (K-Wert 65 bis 76, vorzugsweise
   62 bis 75                                100             "

   Monomer-/Polymerweichmacher              40 bis 70       "

   mindestens ein Thermostabilisator,
   vorzugsweise auf der Basis einer
   Blei- oder BaZn- oder Sn-Verbindung                                  2 bis  4        "

   chemisches Treibmittel, z.B.
   Azodicarbonamid                          2 bis  5        "

Verarbeitungsbeispiel

| Rezeptur | A<br>(für die Kompakt-<br>schicht) | | B<br>(für die Sperr-<br>schicht) | |
|---|---|---|---|---|
| Suspensions-Polyvinylchlorid<br>(K-Wert 71) | 100 Gew.-T. | | 100 Gew.-T. | |
| Weichmacher (Di-Iso-<br>nonylphthalat) | 60 | " | 60 | " |
| Stabilisator (2-basi-<br>sches Bleiphosphit) | 6 | " | 6 | " |
| Pigment (Ruß) | 1,5 | " | 1,5 | " |
| Treibmittel<br>(Azodicarbonamid) | – | " | 2 | " |

In die vorgeheizte (Rotations-) Gießform (Oberflächentemperatur 230 °C) wird das Polyvinylchlorid-Dry-Blend A im Überschuß geschüttet. Nach einer Verweilzeit von 20 s wird das nicht angesinterte Polyvinylchlorid-Dry-Blend abgeschüttet und die Gießform zum weiteren Sintern der Polyvinylchlorid-Haut (Kompaktschicht) wieder in den Ofen geschoben (die Verweilzeit hängt von der Ofentemperatur ab. Bei z.B. 340 °C Ofentemperatur beträgt die Verweilzeit 30 s).

Anschließend wird das Polyvinylchlorid-Dry-Blend B für die Sperrschicht im Überschuß in die Gießform auf die gesinterte und noch heiße Polyvinylchlorid-Haut geschüttet. Nach einer Verweilzeit von ca. 20 s wird das nicht angesinterte Polyvinylchlorid-Dry-Blend abgeschüttet und die Gießform zum vollständigen Sintern (und gleichzeitigem Aufschäumen des Polyvinylchlorid-Dry-Blends B) nochmals in den Ofen gebracht (bei einer Ofentemperatur von 340 °C ca. 30 s).

Danach wird die Gießform dem Ofen entnommen und mit Wasser auf ca. 40 °C abgekühlt. Das Polyvinylchlorid-Teil kann nun entformt werden.

Anschließend wird dieses Teil in bekannter Weise mit PUR hinterschäumt. Bei den gewählten Bedingungen beträgt die durchschnittliche Dicke der Polyvinylchlorid-Haut 1 mm, die durchschnittliche Dicke der Polyvinylchlorid-Schaum-Schicht (aus Rezeptur B) beträgt 2 mm.

Prüfbeispiel

Es wurde der Weichmacherverlust der Polyvinylchlorid-Haut mit Polyurethanschaum ermittelt nach einer 500 stündigen Lagerung bei 132 °C. Er beträgt bei dem erfindungsgemäß hergestellten Teil 14 %. Ein Vergleichsbeispiel ohne die Sperrschicht aus Polyvinylchlorid-Dry-Blend B ergibt 25 % Weichmacherverlust.

Diese unterschiedlichen Restweichmachergehalte ergeben unterschiedliche Steifigkeiten. Ein nicht nach dem erfindunsgemäßen Verfahren (ohne Sperrschicht) hergestelltes Teil ist so steif, daß es bei Stoß- und Knickbeanspruchung bricht, wogegen das erfindungsgemäß hergestellte Teil diese Beanspruchung über-steht.

8

Um den thermischen Abbau des Polyvinylchlorid genauer beobachten zu können als dies bei den für die Praxis eingefärbten Rezepturen A und B möglich ist, kann man diese Rezepturen ohne Pigmentierung verarbeiten. Bei einer 132 °C-Lagerung stellt man folgende Farben in Abhängigkeit von der Lagerzeit fest:

|  | 0 h | 500 h |
|---|---|---|
| 1. Polyvinylchlorid-Haut | beige | beige |
| 2. Kombination Polyvinylchlorid-Haut und Polyurethanschaum | beige | beige (bezogen auf die Sichtseite der Kompaktschicht) |
| 3. Kombination Polyvinylchlorid-Haut (Kompaktschicht) und Polyvinylchlorid-Schaum (Sperrschicht) und Polyurethanschaum | beige | beige (bezogen auf die Sichtseite der Kompaktschicht) |

**Patentansprüche**

1.  Verfahren zur Herstellung von geformten Gegenständen, die über einer Schicht mit mindestens einer Schaumstruktur eine ungeschäumte, im "slush-molding"-Verfahren hergestellte Vinylchloridhomo-, -co-, -ter- oder -pfropfpolymerisatschicht (Kompaktschicht) vorzugsweise aus Weichpolyvinylchlorid, aufweisen und zur Herstellung der ungeschäumten Schicht zunächst ein weichmacherhaltiges Vinylchloridhomo-, -co-, -ter-, oder -pfropfpolymerisat im "slush-molding"-Verfahren in eine Form eingebracht, durch Erhitzen geliert oder gesintert, vorzugsweise angeliert oder angesintert wird und die Kompaktschicht oder Oberschicht bildet, wonach gegebenenfalls im Überschuß aufgebrachte(s) oder eingebrachte(s), nicht gelierte(s) oder gesinterte(s), vorzugsweise nicht angelierte(s) oder angesinterte(s) Pulver, Plastisol oder Paste aus der Form ausgetragen oder abgeschüttet wird, dadurch gekennzeichnet, daß nach dem Sintern oder Gelieren, ein weichmacherhaltiges Vinylchloridhomo-, -co-, -ter- oder -pfropfpolymerisat, das mindestens ein wasserfreies chemisches Treibmittel enthält, im "slush-molding"-Verfahren aufgebracht wird, wobei für die Sperrschicht eine Mischung aus 100 Gew.-Teilen Vinylchloridhomo-, -co-, -ter- oder -pfropfpolymerisat,
    30 bis 80 Gew.-Teilen,
    mindestens eines Weichmachers (Monomerweichmacher und/oder Polymerweichmacher),
    1 bis 15 Gew.-Teilen,
    mindestens eines Stabilisators und/oder Kickers für das Treibmittel (einschließlich Antioxidantien)
    1 bis 6 Gew.-Teilen,
    mindestens eines wasserfreien chemischen Treibmittels oder Treibmittelgemisches,
    0 bis 20 Gew.-Teilen,
    mindestens eines Füllstoffes oder Füllstoffgemisches und/oder Pigmentes und/oder Zusatzstoffes verwendet und die Mischung im "slush-molding"-Verfahren bei Temperaturen über 180 °C, gesintert, geliert und ausgeschäumt wird und danach in einer anderen Form die Aufbringung einer weiteren Schaumschicht oder Hinterschäumung erfolgt.

2.  Verfahren nach Anspruch 1, dadurch gekennzeichnet, daß für die Kompaktschicht eine Mischung aus 100 Gew.-Teilen Vinylchloridhomo-, -co-, -ter- oder -pfropfpolymerisat,
    30 bis 80 Gew.-Teile, vorzugsweise
    40 bis 70 Gew.-Teile,
    mindestens eines Weichmachers (Monomerweichmacher und/oder Polymerweichmacher),
    1 bis 15 Gew.-Teilen, vorzugsweise
    2 bis 10 Gew.-Teilen,
    mindestens eines Stabilisators, einschließlich Antioxidantien oder Lichtstabilisatoren,
    0 bis 2 Gew.-Teilen, vorzugsweise
    0,5 bis 1,5 Gew.-Teilen,
    mindestens eines Entformungshilfsmittels oder Verarbeitungshilfsmittels,
    0 bis 10 Gew.-Teilen, vorzugsweise
    1 bis 5 Gew.-Teilen,
    mindestens eines Pigmentes und/oder Farbstoffes,
    0 bis 10 Gew.-Teilen, vorzugsweise
    0 bis 5 Gew.-Teilen,
    mindestens eines Füllstoffes und/oder Zusatzstoffes, verwendet und die Mischung im "slush-molding"-Verfahren bei Temperaturen über 180 °C, vorzugsweise über 200 °C, angesintert oder gesintert wird.

3. Verfahren nach Ansprüchen 1 und 2, dadurch gekennzeichnet, daß nach der Sinterung oder Ansinterung der Kompaktschicht die Mischung für die Sperrschicht im "slush-molding"-Verfahren in die erhitzte, eine gleichmäßige oder annähernd gleichmäßige Kompaktschicht aufweisende Form, eingebracht und bei Temperaturen über 180 °C, vorzugsweise über 200 °C, durch Steuerung (Formgebung, Materialanordnung der Form) unter Bildung einer gleichmäßigen oder annähernd gleichmäßigen feinporigen dicken Sperrschicht gesintert und ausgeschäumt wird.

4. Verfahren nach einem oder mehreren der Ansprüche 1 bis 3, dadurch gekennzeichnet, daß die mittlere Dicke der Kompaktschicht
0,4 bis 3 mm, vorzugsweise
0,7 bis 1,5 mm,
beträgt.

5. Verfahren nach einem oder mehreren der Ansprüche 1 bis 4, dadurch gekennzeichnet, daß die mittlere Dicke der gesinterten und geschäumten Sperrschicht
0,5 bis 4 mm, vorzugsweise
1,5 bis 3 mm,
beträgt.

6. Verfahren nach einem oder mehreren der Ansprüche 1 bis 5, dadurch gekennzeichnet, daß für die Sperrschicht und/oder Kompaktschicht eine Mischung aus 100 Gew.-Teilen Vinylchloridhomo-, -co-, -ter- oder -pfropfpolymerisat verwendet wird, die einen K-Wert von
50 bis 80, vorzugsweise
62 bis 75,
aufweist und in Form eines Pulvers und/oder einer Paste eingesetzt wird.

7. Verfahren nach einem oder mehreren der Ansprüche 1 bis 6, dadurch gekennzeichnet, daß die geschäumte Sperrschicht eine Dichte von
0,2 bis 0,8 g/cm$^2$, vorzugsweise
0,4 bis 0,6 g/cm$^2$,
aufweist.

8. Verfahren nach einem oder mehreren der Ansprüche 1 bis 7, dadurch gekennzeichnet, daß bei der Ausschäumung der Sperrschicht diese einer höheren Temperatur und/oder längeren Wärmeeinwirkungszeit ausgesetzt wird.

9. Verfahren nach einem oder mehreren der Ansprüche 1 bis 8, dadurch gekennzeichnet, daß die Ausschäumtemperatur der Sperrschicht bei einer Temperatur, die um
mehr als 5 K, vorzugsweise
mehr als 10 K,
höher ist, als die Temperatur die zur Bildung der Kompaktschicht verwendet wurde und/oder die Ausschäumzeit für die Sperrschicht um
mehr als 5 %, vorzugsweise
mehr als 10 %,
oberhalb der Gelier- oder Sinterzeit der Kompaktschicht liegt.

10. Verfahren nach einem oder mehreren der Ansprüche 1 bis 9, dadurch gekennzeichnet, daß auf die Sperrschicht als weitere Schaumschicht oder Hinterschäumung ein PVC-armer (PVC-Gehalt unter 25 Gew.-%), vorzugsweise PVC-freier Schaum aufgebracht wird.

11. Verfahren nach einem oder mehreren der Ansprüche 1 bis 10, dadurch gekennzeichnet, daß nach dem Aufbringen der Sperrschicht der aus mindestens zwei Schichten bestehende geformte Gegenstand aus der Form herausgenommen und in einer getrennten Form mit einem Polyurethanschaum hinterschäumt wird.

**12.** Verwendung einer Mischung die je 100 Gew.-Teile Vinylchloridhomo-, -co-, -ter- oder -pfropfpolymerisat

30 bis 80 Gew.-Teilen, vorzugsweise

40 bis 70 Gew.-Teilen,

mindestens eines Weichmachers (Monomerweichmacher und/oder Polymerweichmacher),

1 bis 15 Gew.-Teilen, vorzugsweise

2 bis 10 Gew.-Teilen,

mindestens eines Stabilisators und/oder Kickers für das Treibmittel (einschließlich Antioxidantien)

1 bis 6 Gew.-Teilen, vorzugsweise

1,5 bis 3 Gew.-Teilen,

mindestens eines chemischen wasserfreien Treibmittels oder Treibmittelgemisches,

0 bis 20 Gew.-Teilen, vorzugsweise

0 bis 10 Gew.-Teilen,

mindestens eines Füllstoffes oder Füllstoffgemisches und/oder Zusatzstoffes zur Herstellung einer Sperrschicht im "slush-molding"-Verfahren.

**13.** Verwendung einer Mischung in Form eines Pulvers oder einer Paste zur Herstellung einer Sperrschicht im "slush-molding"-Verfahren, die je 100 Gew.-Teile Vinylchloridhomo-, -co-, -ter- oder -pfropfpolymerisat, mit einem K-Wert von

50 bis 80, vorzugsweise

62 bis 75,

30 bis 80 Gew.-Teilen, vorzugsweise

40 bis 70 Gew.-Teilen,

mindestens eines Weichmachers (Monomerweichmacher und/oder Polymerweichmacher),

1 bis 15 Gew.-Teilen, vorzugsweise

2 bis 10 Gew.-Teilen,

mindestens eines Stabilisators und/oder Kickers für das Treibmittel (einschließlich Antioxidantien),

1 bis 6 Gew.-Teilen, vorzugsweise

1,5 bis 3 Gew.-Teilen,

mindestens eines chemischen wasserfreien Treibmittels oder Treibmittelgemisches,

0 bis 20 Gew.-Teilen, vorzugsweise

0 bis 10 Gew.-Teilen,

mindestens eines Füllstoffes oder Füllstoffgemisches und/oder Zusatzstoffes zur Herstellung von temperaturbeständigen Innenraumteilen von Kraftfahrzeugen.

**14.** Verfahren nach Anspruch 1, dadurch gekennzeichnet, daß für die Sperrschicht eine Mischung aus 100 Gew.-Teilen Vinylchloridhomo-,-co-,oder -pfropfpolymerisat,

40 bis 70 Gew.-Teilen

mindestens eines Weichmachers (Monomerweichmacher und/oder Polymerweichmacher),

2 bis 10 Gew.-Teilen

mindestens eines Stabilisators und/oder Kickers für das Treibmittel (einschließlich Antioxidantien),

1,5 bis 3 Gew.-Teilen

mindestens eines wasserfreien chemischen Treibmittels oder Treibmittelgemisches,

0 bis 10 Gew.-Teilen

mindestens eines Füllstoffes oder Füllstoffgemisches und/oder Pigmentes und/oder Zusatzstoffes verwendet und die Mischung im "slush-molding"-Verfahren bei Temperaturen über 200 ° C gesintert, geliert und ausgeschäumt wird und danach in einer anderen Form die Aufbringung einer weiteren Schaumschicht oder Hinterschäumung erfolgt.

**Claims**

**1.** A method for producing moulded objects which have an unfoamed layer of vinyl chloride homopolymer, copolymer, terpolymer or graft polymer (compact layer), preferably made of soft polyvinyl chloride, produced in the slush-moulding process over a layer having at least one foamed structure, and for the production of the unfoamed layer first of all a softener-containing vinyl chloride homopolymer, copolymer, terpolymer or graft polymer is introduced into a mould in the slush-moulding process, is gelled or sintered, preferably initially gelled or initially sintered, by heating and forms the compact layer or top layer, whereafter optionally non-gelled or non-sintered, preferably non-initially gelled or non-initially sintered, powder, plastisol or paste applied or introduced in an excess is discharged from or shaken out of the mould, characterised in that after the sintering or gelling a softener-containing vinyl chloride homopolymer, copolymer, terpolymer or graft polymer which contains at least one anhydrous chemical expanding agent is applied in the slush-moulding process, with a mixture of 100 parts by weight vinyl chloride homopolymer, copolymer, terpolymer or graft polymer,

    30 to 80 parts by weight

of at least one softener (monomer softener and/or polymer softener),

    1 to 15 parts by weight

of at least one stabiliser and/or kicker for the expanding agent (including antioxidants),

    1 to 6 parts by weight

of at least one anhydrous chemical expanding agent or expanding agent mixture,

    0 to 20 parts by weight

of at least one filler or filler mixture and/or pigment and/or additive being used for the barrier layer, and the mixture being sintered, gelled and foamed in the slush-moulding process at temperatures above 180°C, and then the application of an additional foam layer or back-foamed layer taking place in a different mould.

2. A method according to Claim 1, characterised in that a mixture of 100 parts by weight vinyl chloride homopolymer, copolymer, terpolymer or graft polymer,

    30 to 80 parts by weight, preferably

    40 to 70 parts by weight,

of at least one softener (monomer softener and/or polymer softener)

    1 to 15 parts by weight, preferably

    2 to 10 parts by weight,

of at least one stabiliser, including antioxidants or light stabilisers,

    0 to 2 parts by weight, preferably

    0.5 to 1.5 parts by weight,

of at least one mould-release aid or processing aid,

    0 to 10 parts by weight, preferably

    1 to 5 parts by weight,

of at least one pigment and/or dye, and

    0 to 10 parts by weight, preferably

    0 to 5 parts by weight,

of at least one filler and/or additive is used for the compact layer, and the mixture is initially sintered or sintered in the slush-moulding process at temperatures above 180°C, preferably above 200°C.

3. A method according to Claims 1 and 2, characterised in that after the sintering or initial sintering of the compact layer the mixture for the barrier layer in the slush-moulding process is introduced into the heated mould, which has a uniform or approximately uniform compact layer, and is sintered and foamed at temperatures of above 180°C, preferably above 200°C, by controlling (shaping, material arrangement of the mould), forming a uniform or approximately uniform fine-pored thick barrier layer.

4. A method according to one or more of Claims 1 to 3, characterised in that the average thickness of the compact layer is

    0.4 to 3 mm, preferably

    0.7 to 1.5 mm.

5. A method according to one or more of Claims 1 to 4, characterised in that the average thickness of the sintered and foamed barrier layer is

    0.5 to 4 mm, preferably

    1.5 to 3 mm.

6. A method according to one or more of Claims 1 to 5, characterised in that a mixture of 100 parts by weight vinyl chloride homopolymer, copolymer, terpolymer or graft polymer which has a K-value of

    50 to 80, preferably

    62 to 75,

and is used in the form of a powder and/or a paste is used for the barrier layer and/or compact layer.

7. A method according to one or more of Claims 1 to 6, characterised in that the foamed barrier layer has a density of

    0.2 to 0.8 g/cm$^2$, preferably

    0.4 to 0.6 g/cm$^2$.

8. A method according to one or more of Claims 1 to 7, characterised in that during the foaming of the barrier layer the latter is exposed to a higher temperature and/or longer heat exposure time.

9. A method according to one or more of Claims 1 to 8, characterised in that the foaming temperature of the barrier layer is at a temperature which is

    more than 5 K, preferably

    more than 10 K,

higher than the temperature which was used for forming the compact layer and/or the foaming time for the barrier layer is

    more than 5%, preferably

    more than 10%,

greater than the gelling or sintering time of the compact layer.

10. A method according to one or more of Claims 1 to 9, characterised in that a low-PVC (PVC content less than 25% by weight), preferably PVC-free, foam is applied to the barrier layer as an additional foam layer or back-foamed layer.

11. A method according to one or more of Claims 1 to 10, characterised in that after the application of the barrier layer the shaped object consisting of at least two layers is removed from the mould and is back-foamed with a polyurethane foam in a separate mould.

12. The use of a mixture which contains per 100 parts by weight vinyl chloride homopolymer, copolymer, terpolymer or graft polymer

    30 to 80 parts by weight, preferably

    40 to 70 parts by weight,

of at least one softener (monomer softener and/or polymer softener),

    1 to 15 parts by weight, preferably

    2 to 10 parts by weight,

of at least one stabiliser and/or kicker for the expanding agent (including antioxidants),

    1 to 6 parts by weight, preferably

    1.5 to 3 parts by weight,

of at least one chemical anhydrous expanding agent or expanding agent mixture, and

    0 to 20 parts by weight, preferably

    1 to 10 parts by weight,

of at least one filler or filler mixture and/or additive for the preparation of a barrier layer in the slush-moulding process.

13. The use of a mixture in the form of a powder or a paste for producing a barrier layer in the slush-moulding process which [contains] per 100 parts by weight vinyl chloride homopolymer, copolymer, terpolymer or graft polymer, with a K-value of

    50 to 80, preferably

    62 to 75,

    30 to 80 parts by weight, preferably

    40 to 70 parts by weight,

of at least one softener (monomer softener and/or polymer softener),

    1 to 15 parts by weight, preferably

    2 to 10 parts by weight,

of at least one stabiliser and/or kicker for the expanding agent (including antioxidants),

    1 to 6 parts by weight, preferably

    1.5 to 3 parts by weight,

of at least one chemical anhydrous expanding agent or expanding agent mixture, and

    0 to 20 parts by weight, preferably

    1 to 10 parts by weight,

of at least one filler or filler mixture and/or additive for the production of heat-resistant interior parts for motor vehicles.

14. A method according to Claim 1, characterised in that a mixture of 100 parts by weight vinyl chloride homopolymer, copolymer or graft polymer,

    40 to 70 parts by weight
of at least one softener (monomer softener and/or polymer softener),

    2 to 10 parts by weight
of at least one stabiliser and/or kicker for the expanding agent (including antioxidants),

    1.5 to 3 parts by weight
of at least one anhydrous chemical expanding agent or expanding agent mixture, and

    0 to 10 parts by weight
of at least one filler or filler mixture and/or pigment and/or additive is used for the barrier layer, and the mixture is sintered, gelled and foamed in the slush-moulding process at temperatures above 200°C, and then the application of an additional foam layer or back-foamed layer takes place in a different mould.

## Revendications

1. Procédé de préparation d'objets moulés, qui présentent, sur une couche avec au moins une structure vacuolaire, une couche non vacuolaire (couche compacte) d'homopolymère, de copolymère, de terpolymère ou de polymère greffé de chlorure de vinyle, de préférence de chlorure de polyvinyle plastifié, préparée selon le procédé de "coulée en moules creux", et dans lequel, pour la préparation de la couche non vacuolaire, un homopolymère, un copolymère, un terpolymère ou un polymère greffé de chlorure de vinyle contenant un plastifiant est tout d'abord introduit dans un moule selon le procédé de "coulée en moules creux", gélifié ou fritté par chauffage, de préférence en début de gélification ou de frittage et forme la couche compacte ou couche supérieure, après quoi éventuellement la poudre, le plastisol ou la pâte appliqué(e) ou introduit(e) en excès, non gélifié(e) ou non fritté(e), de préférence non en début de gélification ou de frittage, est déchargé(e) ou déversé(e) du moule, caractérisé en ce que, après géléification ou frittage, un homopolymère, un copolymère, un terpolymère ou un polymère greffé de chlorure de vinyle contenant un plastifiant, qui contient au moins un agent moussant chimique exempt d'eau, est appliqué selon le procédé de "coulée en moules creux", en utilisant pour la couche d'arrêt un mélange de 100 parties en poids d'homopolymère, de copolymère, de terpolymère ou de polymère greffé de chlorure de vinyle,

    de 30 à 80 parties en poids, de préférence de 40 à 70 parties en poids,
d'au moins un plastifiant (plastifiant monomère et/ou plastifiant polymère),

    de 1 à 15 parties en poids, de préférence de 2 à 10 parties en poids,
d'au moins un stabilisant et/ou un promoteur pour l'agent moussant (y compris des anti-oxydants),

    de 1 à 6 parties en poids, de préférence de 1,5 à 3 parties en poids,
d'au moins un agent moussant ou un mélange d'agents moussants chimique exempt d'eau,

    de 0 à 20 parties en poids, de préférence de 0 à 10 parties en poids,
d'au moins une charge ou un mélange de charges et/ou un pigment et/ou un additif, on fritte, on gélifie et on expanse le mélange selon le procédé de "coulée en moules creux" à des températures supérieures à 180°C, et de préférence supérieures à 200°C et ensuite on procède, dans un autre moule, à l'application d'une autre couche de mousse ou à une contre-expansion.

2. Procédé selon la revendication 1, caractérisé en ce qu'on utilise pour la couche compacte un mélange de 100 parties en poids d'un homopolymère, d'un copolymère, d'un terpolymère ou d'un polymère greffé de chlorure de vinyle,

    de 30 à 80 parties en poids, de préférence
    de 40 à 70 parties en poids
d'au moins un plastifiant (plastifiant monomère et/ou plastifiant polymère),

    de 1 à 15 parties en poids, de préférence
    de 2 à 10 parties en poids
d'au moins un stabilisant, y compris des anti-oxydants ou des photostabilisants,

    de 0 à 2 parties en poids, de préférence
    de 0,5 à 1,5 partie en poids
d'au moins un agent auxiliaire de démoulage ou d'un agent auxiliaire de traitement,

EP 0 347 528 B1

de 0 à 10 parties en poids, de préférence
de 1 à 5 parties en poids
d'au moins un pigment et/ou d'un colorant,
de 0 à 10 parties en poids, de préférence
de 0 à 5 parties en poids
d'au moins une charge et/ou un additif, et on fritte ou démarre le frittage selon le procédé de "coulée en moules creux" à des températures supérieures à 180°C, de préférence supérieures à 200°C.

3. Procédé selon les revendications 1 et 2, caractérisé en ce que, après le frittage ou le début de frittage de la couche compacte, le mélange destiné à la couche d'arrêt est fritté et expansé à des températures supérieures à 180°C, de préférence supérieures à 200°C, par réglage (façonnage, agencement matériel du moule) en formant une couche d'arrêt épaisse à pores fins uniforme ou approximativement uniforme.

4. Procédé selon une ou plusieurs des revendications 1 à 3, caractérisé en ce que l'épaisseur moyenne de la couche compacte est de
0,4 à 3 mm, de préférence
0,7 à 1,5 mm.

5. Procédé selon une ou plusieurs des revendications 1 à 4, caractérisé en ce que l'épaisseur moyenne de la couche d'arrêt frittée et expansée est de
0,5 à 4 mm, de préférence
1,5 à 3 mm.

6. Procédé selon une ou plusieurs des revendications 1 à 5, caractérisé en ce qu'on utilise pour la couche d'arrêt et/ou la couche compacte un mélange de 100 parties en poids d'homopolymère, de copolymère, de terpolymère ou de polymère greffé de chlorure de vinyle, qui a une valeur K de
50 à 80, de préférence
62 à 75
sous la forme d'une poudre et/ou d'une pâte.

7. Procédé selon une ou plusieurs des revendications 1 à 6, caractérisé en ce que la couche d'arrêt expansée a un poids spécifique de
0,2 à 0,8 g/cm$^2$, de préférence
0,4 à 0,6 g/cm$^2$.

8. Procédé selon une ou plusieurs des revendications 1 à 7, caractérisé en ce que, lors de l'expansion de la couche d'arrêt, celle-ci est soumise à une température plus élevée et/ou à une période d'exposition à la chaleur plus longue.

9. Procédé selon une ou plusieurs des revendications 1 à 8, caractérisé en ce la température d'expansion de la couche d'arrêt se situe à une valeur qui est supérieure de
plus de 5°K, de préférence
plus de 10°K
à la température qui a été utilisée pour la formation de la couche compacte et/ou le temps d'expansion de la couche d'arrêt est supérieur de
plus de 5 %, de préférence
plus de 10 %
au temps de gélification ou de frittage de la couche compacte.

10. Procédé selon une ou plusieurs des revendications 1 à 9, caractérisé en ce qu'on applique sur la couche d'arrêt, sous la forme d'une autre couche de mousse ou d'une couche de contre-expansion, une mousse pauvre en PVC (teneur en PVC inférieure à 25 % en poids), de préférence exempte de PVC.

11. Procédé selon une ou plusieurs des revendications 1 à 10, caractérisé en ce que, après application de la couche d'arrêt, l'objet moulé constitué d'au moins deux couches est retiré du moule et est soumis à une contre-expansion avec une mousse de polyuréthane dans un autre moule.

15

12. Utilisation d'un mélange constitué respectivement de 100 parties en poids d'un homopolymère, d'un copolymère, d'un terpolymère ou d'un polymère greffé de chlorure de vinyle,

de 30 à 80 parties en poids, de préférence
de 40 à 70 parties en poids

d'au moins un plastifiant (plastifiant monomère et/ou plastifiant polymère),

de 1 à 15 parties en poids, de préférence
de 2 à 10 parties en poids

d'au moins un stabilisant et/ou un promoteur pour l'agent moussant (y compris des anti-oxydants),

de 1 à 6 parties en poids, de préférence
de 1,5 à 3 parties en poids

d'au moins un agent moussant ou un mélange d'agents moussants chimique exempt d'eau,

de 0 à 20 parties en poids, de préférence
de 0 à 10 parties en poids

d'au moins une charge ou un mélange de charges et/ou un additif pour la préparation d'une couche d'arrêt selon le procédé de "coulée en moules creux".

13. Utilisation d'un mélange sous la forme d'une poudre ou d'une pâte pour la préparation d'une couche d'arrêt selon le procédé de "coulée en moules creux", qui est constitué respectivement d'un homopolymère, d'un copolymère, d'un terpolymère ou d'un polymère greffé ayant une valeur K de

50 à 80, de préférence
62 à 75,
de 30 à 80 parties en poids, de préférence
de 40 à 70 parties en poids

d'au moins un plastifiant (plastifiant monomère et/ou plastifiant polymère),

de 1 à 15 parties en poids, de préférence
de 2 à 10 parties en poids

d'au moins un stabilisant et/ou un promoteur pour l'agent moussant (y compris des anti-oxydants),

de 1 à 6 parties en poids, de préférence
de 1,5 à 3 parties en poids

d'au moins un agent moussant ou un mélange d'agents moussants chimique exempt d'eau,

de 0 à 20 parties en poids, de préférence
de 0 à 10 parties en poids

d'au moins une charge ou un mélange de charges et/ou un additif pour préparer des pièces de garnissage internes résistant à la température pour des véhicules automobiles.

14. Procédé selon la revendication 1, caractérisé en ce qu'on utilise pour la couche d'arrêt un mélange de 100 parties en poids d'homopolymère, de copolymère, de terpolymère ou de polymère greffé de chlorure de vinyle,

de 40 à 70 parties en poids

d'au moins un plastifiant (plastifiant monomère et/ou plastifiant polymère),

de 2 à 10 parties en poids

d'au moins un stabilisant et/ou un promoteur pour l'agent moussant (y compris des anti-oxydants),

de 1,5 à 3 parties en poids

d'au moins un agent moussant ou un mélange d'agents moussants chimique exempt d'eau,

de 0 à 10 parties en poids

d'au moins une charge ou un mélange de charges et/ou un pigment et/ou un additif, on fritte, on gélifie et on expanse le mélange selon le procédé de "coulée en moules creux" à des températures supérieures à 200°C, et ensuite on procède, dans un autre moule, à l'application d'une autre couche de mousse ou à une contre-expansion.